# EUROPÄISCHE PATENTANMELDUNG

(11) **EP 0 548 796 A1**
(43) Veröffentlichungstag der Anmeldung: **30.06.1993**
(21) Anmeldenummer: 92121463.1
(22) Anmeldetag: 17.12.1992
(51) Int. Cl.: A01N 55/08

(54) **Mikrobizides Mittel enthaltend polymeres quartäres Ammoniumborat zum Konservieren und Desinfizieren von technischen Erzeugnissen und technischen Anlagen**

(30) Priorität: 20.12.1991 DE 4142424
(71) Anmelder: HOECHST AKTIENGESELLSCHAFT, D-65926 Frankfurt am Main (DE)
(72) Erfinder: Lang, Frank, W-6234 Hattersheim am Main (DE); Gatter, Erich, Dr., W-8261 Kastl (DE); Berenbold, Helmut, Dr., W-6200 Wiesbaden (DE); Wehle, Detlef, Dr., W-6272 Niedernhausen (DE)

(57) **Zusammenfassung**

Gegenstand der Erfindung ist die Verwendung eines mikrobiziden Mittels enthaltend polymeres quartäres Ammoniumborat, erhalten durch gleichzeitige Umsetzung von Aminen der allgemeinen Formel I oder II 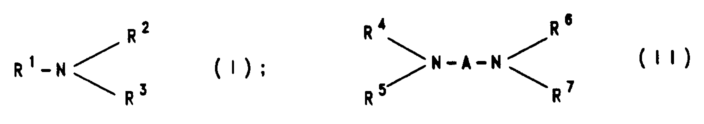
worin R¹ bis R⁷ und A die in der Beschreibung angegebene Bedeutung besitzen, mit 1 bis 20 Mol Ethylen- oder Propylenoxid und 0,6 bis 1,5 Mol Borsäure, Borsäureestern oder Salzen der Borsäure, jeweils pro Mol Stickstoffäquivalent als Konservierungsmittel und/oder Desinfektionsmittel für technische Erzeugnisse und technische Anlagen.

## Beschreibung

Es ist bekannt, daß quartäre Ammoniumverbindungen, wie Alkylbenzyldimethylammoniumchlorid, Verbindungen mit guter mikrobizider Wirkung darstellen. Unter dem Begriff mikrobizide Wirkung werden bakterizide, fungizide und algizide Wirksamkeit im üblichen Sinne verstanden.
Es ist außerdem bekannt, daß quartäre Ammoniumverbindungen allein oder in Kombination mit anderen mikrobiziden Wirkstoffen, wie Alkoholen oder Aldehyden, zur Desinfektion oder zum Konservieren eingesetzt werden (siehe K.H. Wallhäuser, "Sterilisation - Desinfektion - Konservierung", Georg Thieme Verlag Stuttgart, 3. Auflage, 1984, Seiten 133, 472).

Aus EP-A-0 355 316 ist bekannt, daß quartäre Ammoniumborate als Mittel zum Konservieren von Holz, Holzwerkstoffen und anderen cellulosehaltigen Produkten Verwendung finden.

Die bisher bekannten quartären Ammoniumverbindungen besitzen jedoch eine Reihe von Nachteilen. So hat es sich gezeigt, daß insbesondere quartäre Ammoniumhalogenide korrosiv auf Metalle einwirken. Somit lassen sich quartäre Ammoniumverbindungen nur beschränkt zur technischen Desinfektion, wie der Instrumentendesinfektion, einsetzen. Desweiteren zeigen quartäre Ammoniumverbindungen sowohl in wasserhaltigen als auch in lösungsmittelhaltigen Mischungen eine ausgeprägte Schaumbildung. Dieses Verhalten ist für eine Anwendung in Maschinen und Apparaten, in denen die Verbindungen einer intensiven mechanischen Bearbeitung ausgesetzt sind, von erheblichem Nachteil.

Somit bestand weiterhin die Aufgabe quartäre Ammoniumverbindungen bereitzustellen, die sowohl über gute mikrobizide Eigenschaften, als auch geringe korrosive Wirkung und geringe Neigung zur Schaumbildung verfügen und sich als Konservierungsmittel und/oder Desinfektionsmittel für technische Erzeugnisse und technische Anlagen eignen.

Überraschenderweise hat sich gezeigt, daß sich Lösungen oder Mikroemulsionen von polymeren quartären Ammoniumboraten in Wasser oder in organischen Lösemitteln als mikrobizide Mittel mit geringer korrosiver Wirkung und geringer Schaumbildung eignen und aufgrund dieser Eigenschaften als Desinfektionsmittel und/oder Konservierungsmittel für technische Erzeugnisse und technische Anlagen Verwendung finden.

Gegenstand der Erfindung ist die Verwendung eines mikrobiziden Mittels enthaltend, polymeres quartäres Ammoniumborat, erhalten durch gleichzeitige Umsetzung von Aminen der allgemeinen Formeln I oder II 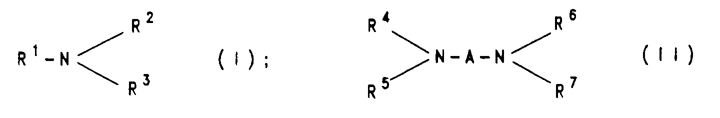
mit 1 bis 20, vorzugsweise 3 bis 10 Mol Ethylen- oder Propylenoxid und 0,6 bis 1,5, vorzugsweise 1 Mol Borsäure, Borsäureestern oder Salze der Borsäure, jeweils pro Mol Stickstoffequivalent, wobei
R¹ C₈-C₂₂-Alkyl oder C₈-C₂₂-Alkenyl bedeutet oder, wenn R² und R³ Gruppen der Formel -(C₂H₄O)ₓH oder -(C₃H₆O)ₓH darstellen, R¹ auch C₁-C₄-Alkyl bedeuten kann,
R² Wasserstoff, C₁-C₂₂-Alkyl oder eine Gruppe der Formeln -C₁-C₂₂-Alkyl oder eine Gruppe der Formeln -(C₂H₄O)ₓH, -(C₃H₆O)ₓH oder -CH₂CH₂CH₂NH₂ bedeutet,
R³ Wasserstoff oder eine Gruppe der Formeln -(C₂H₄O)ₓH, -(C₃H₆O)ₓH oder -CH₂CH₂CH₂NH₂ bedeutet,
R⁴ und R⁶ C₁-C₄-Alkyl oder eine Gruppe der Formel -(C₂H₄O)ₓH oder - (C₃H₆O)ₓH bedeuten,
R⁵ und R⁷ eine Gruppe der Formel -(C₂H₄O)ₓH oder -(C₃H₆O)ₓH,
A eine Gruppe der Formeln -(CH₂)ₙ-, -(CH₂CH₂OCH₂CH₂)ₙ- oder -(CH₂CH₂NHCH₂CH₂)ₙ-,
x Zahlen von 1 bis 55 und n eine ganze Zahl von 1 bis 20 bedeuten,
als Konservierungsmittel und/oder Desinfektionsmittel für technische Erzeugnisse und technische Anlagen.

Als Amine der obigen Formeln sind folgende bevorzugt:
1. Amine der Formel I, wobei R¹ C₈-C₂₂-Alkyl, R² C₈-C₂₂-Alkyl oder C₁-C₄-Alkyl und R³ Wasserstoff oder eine Gruppe der Formel -(C₂H₄O)ₓH oder -(C₃H₆O)ₓH bedeuten.
2. Amine der Formel I, wobei R¹ C₈-C₂₂-Alkyl und R² und R³ Wasserstoff bedeuten.
3. Amine der Formel I, wobei R¹ C₁-C₄-Alkyl oder C₈-C₂₂-Alkyl und R² und R³ Gruppen der Formeln -(C₂H₄O)ₓH oder -(C₃H₆O)ₓH bedeuten, wobei die Summe der Ethylenoxid-Gruppen in den beiden Resten R² und R³ 2 bis 20 beträgt.
4. Amine der Formel I, wobei R¹ C₈-C₂₂-Alkyl, R² Wasserstoff oder eine Gruppe der Formel -CH₂CH₂CH₂NH₂ und R³ eine Gruppe der Formel -CH₂CH₂CH₂NH₂ bedeuten.
5. Amine der Formel II, wobei A, R⁴, R⁵, R⁶ und R⁷ die oben genannten Bedeutungen haben und wobei die Summe aller Ethylenoxidgruppen 4 bis 30 beträgt.

Bei den Alkylenoxid-Gruppen der Formeln -(C₂H₄O)ₓH und -(C₃H₆O)ₓH ist die Gruppe der Formel -(C₂H₄O)ₓH bevorzugt. Anstelle der reinen Polyoxethylen- und Polyoxypropylen-Gruppen können auch solche Reste vorhanden sein, die sowohl aus Ethylenoxid- als auch aus Propylenoxid-Einheiten aufgebaut sind.

Die Umsetzung der Amine mit der Borsäure und dem Alkylenoxid erfolgt in der Weise, daß in einem Autoklaven das jeweilige Amin und die Borsäure vorgelegt und das Alkylenoxid zudosiert wird. Die Reaktionstemperatur beträgt im allgemeinen 60 bis 130°C, vorzugsweise 60 bis 125°C, insbesondere 60 bis 100°C. Der Reaktionsdruck beträgt 50 bis 600 kPa. Die Zudosierung des Alkylenoxides unter diesen Reaktionsbedingungen erfolgt über einen Zeitraum von 1 bis 5 Stunden. Zur Nachreaktion wird das Gemisch bei dem angegebenen Druck 3 bis 12 Stunden auf einer Temperatur von 70 bis 120°C, vorzugsweise 70 bis 100°C gehalten.

Anstelle der Borsäure können auch deren Ester, wie z.B. Trimethylborsäureester, oder deren Salze, beispielsweise Na-Borat eingesetzt werden. Bei der Reaktion entstehen als Nebenprodukte Wasser und Polyglykole.
Die erhaltenen polymeren quartären Ammoniumverbindungen enthalten im wesentlichen als Strukturmerkmal Gruppen der Formel 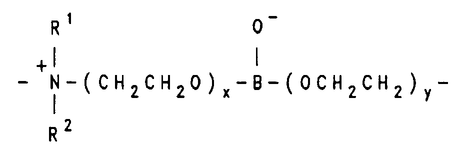
bzw. Gruppen der Formel 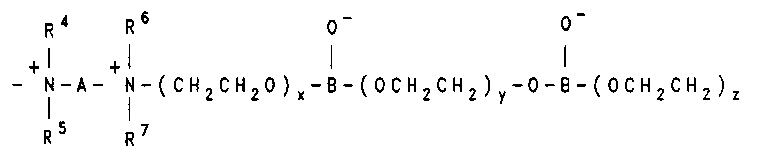
wenn die Reaktion mit Ethylenoxid gemacht wurde.
Die Anwesenheit polymerer bzw. oligomerer quartärer Ammoniumborate ergibt sich schon daraus, daß bei der Reaktion zwischen Aminen der Formeln I und II mit Borsäure und Alkylenoxid Wasser gebildet wird, wie die Beispiele zeigen.

Diese Rohlösungen enthalten üblicherweise, bedingt durch deren Herstellung, etwa 6 - 12 % Wasser und etwa 8 - 12 % Glykole. Eine Entfernung dieser Nebenprodukte, speziell der Glykole, ist möglich, aber für die Praxis unnötig.

Nach Beendigung der Reaktion kann die erhaltene Rohlösung der polymeren quartären Ammoniumborate ohne weitere Reinigung und Aufarbeitung als Konzentrat direkt zu dem angegebenen Zweck eingesetzt werden, oder aber mit anderen mikrobiziden Wirkstoffen und gegebenenfalls mit an sich bekannten Zusatzstoffen zu dem erfindungsgemäßen mikrobiziden Mittel mit eventuell vergrößerter Wirkungsbreite weiterverarbeitet werden.
Zusätzliche mikrobizide Wirkstoffe können quartäre Ammoniumsalze, wie Alkylbenzyldimethylammoniumsalze oder Dialkyldimethylammoniumsalze, Fettamine, Amine, niedere Alkohole, wie Ethanol, Propanol, Aldehyde, wie Formaldehyd, Glutardialdehyd und Glyoxal, Guanidine, wie Alkylguanidine und Alkyldiguanidine und Phenolderivate, wie Salicylate sein, die sowohl in wäßrigen als auch in vorwiegend wasserfreien Zubereitungen zum Einsatz kommen können.
Andere Zusatzstoffe sind z.B. Parfüm oder Farbstoffe.

Die mikrobiziden Mittel in Form ihrer Konzentrate besitzen einen Gehalt von 0,1-70 Gew.-%, bevorzugt 5-40 Gew.-%, an den vorstehend erwähnten polymeren quartären Ammoniumboraten, 99,9-30 Gew.-%, bevorzugt 95-60 Gew.-%, weiterer biozider Wirkstoffe und gegebenenfalls 0-50 Gew.-% Zusatzstoffe.

Die neuen und bekannten mikrobiziden Mittel in Form ihrer Konzentrate können mit Wasser oder nicht-wäßrigen Lösungsmitteln verdünnt werden. Sie sind mit Wasser beliebig vermischbar, wobei sich stabile Lösungen oder Mikroemulsionen bilden. Die Konzentrate sind auch mit nicht-wäßrigen Lösungsmitteln gut mischbar. Die vorwiegend wasserfreien Zubereitungen der Rohlösungen werden erhalten, indem die Konzentrate in einem Lösungsmittel oder bevorzugt einem Lösungsmittelgemisch gelöst werden. Als nicht-wäßrige Lösungsmittel eignen sich Glykole, Glykolether, Ether, niedere Alkohole oder Mischungen dieser Lösungsmittel mit Chloroform oder Methylenchlorid. Durch Zusatz von 5 - 25 Gew.-% von mehrwertigen Alkoholen, insbesondere von Polypropylenglykol bilden sich als vorwiegend wäßrige Zubereitungen klare Lösungen. Das bevorzugte Lösungsmittelgemisch besteht aus einer hochsiedenden Polyolkomponente, wie Polyethylenglykol oder Di- oder Tripropylenglykolmethylester und einem Anteil eines oder mehrerer niedrigsiedender Lösemittel wie ®Shellsol AB (Hersteller: Shell AG), n-Hexan, Toluol, Cyclohexan, Chloralkane, Ketone oder niedere Alkohole.

Die neuen und bekannten mikrobiziden Mittel können 1- 99 Gew.-% der vorstehend genannten Lösungsmittel als Einzelkomponente oder Mischung enthalten. Die Viskosität der Konzentrate und Lösungen bzw. Mikroemulsionen liegt zwischen 1 und 100 Pas, kann aber im Einzelfall bis 300 Pas reichen. Die Viskosität der polymeren quartären Ammoniumborate ist abhängig von der Reaktionstemperatur, höhere Reaktionstemperaturen führen zu niedrigeren Viskositäten.

Die neuen und bekannten mikrobiziden Mittel können zur Konservierung und/oder Desinfektion technischer Erzeugnisse und technischer Anlagen eingesetzt werden. Unter Konservierung ist hauptsächlich der Schutz vor mikrobiellem Befall und Verderb, hervorgerufen durch Bakterien, Pilze, Algen oder ähnlichem, zu verstehen. Unter Desinfektion ist die Abtötung bzw. Inaktivierung von Bakterien, Viren, Pilzen, Algen oder ähnlichem auf bzw. in technischen Anlagen, Gegenständen und auf Händen und Haut zu verstehen. Unter technischen Anlagen sind z.B. Wasserkreisläufe, Wasserbehälter, Wärmeaustauscher und Ölbohr- und Ölfördereinrichtungen, insbesondere bei der Sekundärförderung von Erdöl zu verstehen. Unter technischen Erzeugnissen sind z.B. Polymerdispersionen, Klebstoffe, Dichtmassen, Farben, Lacke, Textilien, Leder, desinfizierende Reinigungsmittel und Kühlschmiermittel zu verstehen.
Die neuen und bekannten mikrobiziden Mittel eignen sich auch als Desinfektionsmittel, insbesondere zur Flächen- und Instrumentendesinfektion und als reinigende Desinfektionsmittel, wie sie vorallem bei der Gebäude- und Haushaltsreinigung verwendet werden.

Zur Lederkonservierung wird das zu konservierende Material, bevorzugt chromgegerbtes Leder (Wet-blue) in einer geeigneten Apparatur, vorzugsweise im Faß, bei 20 bis 200 Gew.-% Flotte, bezogen auf das Ledergewicht und üblicherweise bei einer Temperatur von 15 bis 45°C über einen Zeitraum von 10 Minuten bis 12 Stunden, vorzugsweise 30 Minuten bis 2 Stunden, behandelt. Die Einsatzmenge an polymerem, quartären Ammoniumborat (Wirkstoff) liegt üblicherweise im Bereich zwischen 0,1 und 10 Gew.-%, bevorzugt 0,5 bis 2 Gew.-%, bezogen auf das Ledergewicht. Die wäßrige Flotte enthält neben dem mikrobiziden Mittel die üblicherweise zur Chromgerbung eingesetzten Verbindungen.

Zur Hautkonservierung wird das zu konservierende Material, bevorzugt geweichte, gegebenenfalls entfleischte Haut in einer geeigneten Apparatur, vorzugswise im Faß, bei 20 bis 200 Gew.-% Flotte, bezogen auf das Hautgewicht und üblicherweise bei einer Temperatur von 15 bis 35°C über einen zeitraum von 10 Minuten bis 5 Stunden, vorzugsweise 30 Minuten bis 3 Stunden, behandelt. Die Einsatzmenge an polymerem, quartären Ammoniumborat (Wirkstoff) liegt üblicherweise im Bereich zwischen 0,4 bis 10 Gew.-%, bevorzugt 1 bis 5 Gew.-%, bezogen auf das Hautgewicht. Die wäßrige Flotte besitzt die üblicherweise zur Hautkonservierung eingesetzte Zusammensetzung und zusätzlich das mikrobizide Mittel.

Zum Zwecke der Konservierung und/oder Desinfektion werden die mikrobiziden Mittel in Form der Konzentrate oder Verdünnungen auf das jeweilige technische Erzeugnis oder die jeweilige Anlage aufgebracht. Das Aufbringen erfolgt nach bekannten üblichen Verfahren, wie Sprühen, Streichen oder Giesen. Es ist auch denkbar den jeweiligen Gegenstand in das mikrobizide Mittel einzutauchen.

Die vorstehend beschriebenen polymeren quartären Ammoniumborate können auch als mikrobizide Zusätze bei der Formulierung von desinfizierenden Reinigungsmitteln in Kombination mit üblichen anionischen, nichtionischen, kationischen und amphoteren Tensiden dienen.
Dafür geeignete anionische Tenside sind beispielsweise Seife, Fettalkoholsulfate, Alkylethersulfate, Fettsäurekondensationsprodukte wie Tauride, Methyltauride, Sarkoside, ferner α-Olefinsulfonate, Hydroxyalkansulfonate, sekundäre Alkansulfonate, Amidethersulfate oder Alkylbenzolsulfonate. Als nicht-ionische Tenside können beispielsweise Polyglykolmonoalkylether und -monoester, Aminoxide und Ethylenoxid-Propylenoxid-Kondensationsprodukte verwendet werden. Daneben ist auch die Kombination mit anderen amphoteren Tensiden wie Alkyl-Betainen, Alkylamino-Betainen, Imidazolinderivaten oder Sulfobetainen möglich. Schließlich können die Mittel auch in Abmischung mit Fettaminen, mit kationischen Tensiden wie Ammonium- und Phosphoniumsalzen, quaternierten Etheraminen oder polymeren quartären Ammoniumverbindungen eingesetzt werden. Bevorzugt sind nicht-ionische Tenside. Weitere Zusätze, die auf sonst übliche Weise in Reinigungsmitteln verwendet werden, können gegebenenfalls enthalten sein. Dies sind beispielsweise viskositätserhöhende oder -erniedrigende Verbindungen wie Celluloseether, Elektrolyte wie beispielsweise Natriumchlorid oder Ammoniumchlorid, Fettsäurepolyglykolester, Alkanolamide, Magnesium-Aluminium-Silicate, Polyglykole, Glycerin und Ethanol.
Bei der Verarbeitung zu pulverförmigen Präparaten können weiterhin üblicherweise benutzte Füll- und Trägersubstanzen wie hochdisperse, amorphe Kieselsäure, Natriumsulfat, Magnesium-Aluminium-Silicat, Stärkederivate und dergleichen verwendet werden.
Ferner sind übliche Zusätze Bleichmittel, Chlorabspalter, Chelatbildner und gegebenenfalls auch Kunststoffdispersionen.

Beispiele für die Herstellung der polymeren quartären Ammoniumborate sind in EP-A-0 355 316 (Seite 4 bis Seite 8) beschrieben.

### Herstellungsbeispiel (entspricht Beispiel 13 der EP-A-0 355 316):

Falls nicht anders angegeben, bedeuten die Prozentangaben Gewichtsprozent. Die Viskosität wird mit dem ®Haake RV 12 (Hersteller: Haake, DE) bei einer Temperatur von 25°C und einem Geschwindigkeitsgefälle von D = 21 s⁻¹ bestimmt.
Die Bestimmung des Wassergehaltes erfolgt nach der Methode von Karl Fischer.

In einem 1 I Glasautoklaven legte man eine Mischung aus 206,5 g (0,70 mol) Didecylamin (Aminzahl 190,2) und 43,3 g (0,70 mol) Borsäure in 42,4 g Wasser vor, erwärmte auf eine Temperatur von 78°C und dosierte anschließend bei einer Temperatur von 78 - 88°C und einem Druck von 80 - 340 kPa innerhalb von 2,5 Stunden 138,2 ml (123,3 g, 2,80 mol) flüssiges Ethylenoxid zu. Nach beendeter Zugabe ließ man noch 7 Stunden bei 80°C nachreagieren und brach dann die Reaktion ab. Die schwach gelbe, viskose, homogene Reaktionsmischung wurde durch folgende Analysenwerte charakterisiert: Viskosität: 3,8 Pa^{.}s, Wasser: 18 %, Ethylenglykol: 5,4 %, Diethylenglykol: 2,3 %, Triethylenglykol: 1,4 %, pH-Wert 10,0. Aus einer Ethylenoxid-Bilanz errechnete sich ein statistischer Wert von 3,1 mol chemisch gebundenem Ethylenoxid pro Stickstoffequivalent.

Das nach diesem Beispiel hergestellte polymere quartäre Ammoniumborat wurde in den nachfolgenden Anwendungsbeispielen verwendet.

### Anwendungsbeispiele:

### Ermittlung der mikrobiziden Wirkung:

Die Ermittlung der mikrobiziden Wirkung von polymerem, quartärem Ammoniumborat erfolgte über die Bestimmung der "Minimalen Hemmkonzentration" (MHK) im Bouillondilutionstest gemäß DIN 58940 (Teil 5 und Beiblatt 1 vom Juni 1989).

### Durchführung:

1,0 g Probe, exakt gewogen, wurde mit sterilem Aqua dest. vorverdünnt. Jeweils 2,0 ml der Probenverdünnung wurden in Röhrchen mit 20 ml doppelt konzentrierter Müller-Hinton-Bouillon (Fa. Merck, Art. Nr. 10293) pipettiert, so daß die in Tabelle 1 angegebenen Endkonzentrationen des Wirkstoffes resultierten. Einem Kontrollröhrchen wurden 2,0 ml steriles Aqua dest. zugesetzt.

Bezüglich der Herstellung des Inoculums wurde gemäß den NCCLS/FDA-Empfehlungen verfahren. Nach Anzucht auf festen Medien, Reinheit- und Identitätskontrollen wurden einige Kolonien in sterile Müller-Hinton-Bouillon überimpft und bis zur sichtbaren Trübung bebrütet. Diese Kulturen wurden durch Hinzufügen steriler Bouillon so verdünnt, daß sie der Trübung des McFarland-Standards 0,5 entsprachen (= ca. 10 (8) koloniebildende Einheiten (KBE)/ml). Nach einer weiteren 1:100-Verdünnung wurden je 1,0 ml der Keimsuspension in alle Röhrchen pipettiert (Keimdichte: ca. 5 x 10(5) KBE/ml Bouillon).

Die Röhrchen wurden 20 Stunden (Hefen und Schimmelpilze 48 Stunden) bei 36 ± 1°C bebrütet und danach auf Keimwachstum (Trübung) geprüft. Im Grenzbereich sowie von den Kontrollröhrchen wurden zur Reinheits- und Identitätsprüfung Subkulturen auf geeigneten festen Nährmedien angelegt. Wachstum wurde mit +, kein Wachstum mit - protokolliert.

Der komplette Versuch wurde in einem unabhängigen Experiment wiederholt. In allen Fällen konnten die Ergebnisse reproduziert werden.

Als MHK wurde diejenige Wirkstoffkonzentration angegeben, bei der kein Wachstum von Mikroorganismen nachweisbar war.

**Tabelle 1**

| Ergebnisse des Bouillondilutionstests | | | | | | | | | | |
|---|---|---|---|---|---|---|---|---|---|---|
| Testkeim | Wirkstoffkonzentration in µg/ml | | | | | | | | | MHK in µg/ml |
| | 512 | 256 | 128 | 64 | 32 | 16 | 8 | 4 | K | |
| Pseudomonas aeruginosa | - | - | - | + | + | + | + | + | + | 128 |
| Proteus mirabilis | - | - | - | - | + | + | + | + | + | 64 |
| Staphylococcus aureus | - | - | - | - | - | - | + | + | + | 16 |
| Candida albicans | - | - | - | - | - | + | + | + | + | 32 |
| Aspergillus niger | - | - | - | - | - | - | - | + | + | 8 |

### Ermittlung der korrosionsinhibierenden Wirkung:

Zur Ermittlung der korrosionsinhibierenden Wirkung wurden Stahlcoupons zur Hälfte in unterschiedlich konzentrierte Lösungen des polymeren quartären Ammoniumborats getaucht. Die Stahlcoupons wurden über einen Zeitraum von 7 Tagen bei einer Temperatur von 25°C in der Lösung gelagert und anschließend der Metallabtrag bestimmt. Hierzu wurden korrodierte Teile des Stahlcoupons entfernt und der Gewichtsverlust bestimmt. Die prozentuale Angabe des Gewichtsverlustes wird als Metallabtrag bezeichnet.

**Tabelle 2**

| Ergebnisse der korrosionsinhibierenden Wirkung | |
|---|---|
| Wirkstoffkonzentration [Gew.-%] | Metallabtrag [Gew.-%] |
| 0,1 | <0.02 % ⁺⁾ |
| 0,5 | <0,02 % ⁺⁾ |
| 1,0 | <0,02 % ⁺⁾ |
| 2,5 | <0.02 % ⁺⁾ |
| 5,0 | <0,02 % ⁺⁾ |

| | |
|---|---|
| +) Die Werte für den Metallabtrag der Stahlcoupons liegen im Bereich der Fehlerquote. | |

Zu Vergleichszwecken wurde die Korrosion der Stahlcoupons in vollentsalztem Wasser bestimmt. Der Metallabtrag betrug 0,23 Gew.-%.

### Bestimmung des Schaumverhaltens:

Das Schaumverhalten des polymeren, quartären Ammoniumborats wurde nach DIN 53902 (Teil 1 vom März 1981, "Götte-Schlagschaum") bestimmt. Dazu wurden Lösungen mit unterschiedlichem Gehalt an Wirksubstanz bei einer Temperatur von 25°C hergestellt. Der Schaum wird durch dreißigmaliges Schlagen der Lösung in einen Meßzylinder mit einer an einer Stange befestigten Lochplatte erzeugt. Das Schaumvolumen der Probenlösung wurde 30 Sekunden nach Beendigung des Schlagens durch Ablesen des Schaumvolumens im Meßzylinder bestimmt.

Zum Vergleich wurde das Schaumvolumen von C₈-C₁₈-Alkyl-benzyldimethylammoniumchlorid bestimmt.

### Ergebnis:

**Tabelle 3**

| Bestimmung des Schaumverhaltens | | |
|---|---|---|
| Wirksubstanz [g/l] | Schaumvolumen | |
| | Beispiel 13 | Vergleich |
| 0,02 | 40 | 50 |
| 0,05 | 60 | 120 |
| 0,1 | 80 | 220 |
| 0,2 | 160 | 360 |
| 0,5 | 470 | 540 |
| 0,6 | 540 | 560 |

### Bestimmung der konservierenden Wirkung:

### a) Lederkonservierung:

Chromgegerbtes Leder (Wet-blue) der Stärke 1,8 mm wird nach der Chromgerbung im gleichen Bad bei 30 Gew.-% Flotte, bezogen auf das Blößengewicht und einer Temperatur von 35°C über einen Zeitraum von einer Stunde mit einem mikrobiziden Mittel der nachfolgenden Wirkstoffkonzentration behandelt.

Nach Behandlung wird das Leder entnommen und gestapelt.

Tabelle 4 gibt an, nach welchem Zeitraum (Tag, d) das behandelte Leder bei einer Lagertemperatur von 20°C von Schimmelpilz befallen wurde.
Wirkstoff: Poly-(didecyl-polyoxyethyl-ammoniumborat)

**Tabelle 4**

| Wirkstoffkonzentration, bezogen auf Blößengewicht [Gew.-%] | Schimmelbefall bei 20°C [d] |
|---|---|
| 0 | 9 |
| 0,1 | 150 |
| 0,2 | 200 |
| 0,5 | > 200 |
| 1 | > 200 |
| 2 | > 200 |

Das behandelte Leder weist erst nach frühestens sechsmonatiger Lagerzeit einen Befall durch Schimmelpilz auf.

### b) Hautkonservierung:

Vorgeweichte und entfleischte Haut (Rind) wird in der Hauptweiche im Faß bei 30 Gew.-% Flotte, bezogen auf das Hautgewicht und einer Temperatur Von 25°C über einen Zeitraum von einer Stunde mit einem mikrobiziden Mittel der nachfolgenden Wirkstoffkonzentration behandelt. Nach der Behandlung wird die Haut entnommen und gestapelt.

Tabelle 5 gibt an, nach welchem Zeitraum (Tag, d) die behandelte Haut bei einer Lagertemperatur von 20°C von Fäulnisbakterien befallen wurde.
Wirkstoff: Poly-(didecyl-polyoxyethyl-ammoniumborat)

**Tabelle 5**

| Wirkstoffkonzentration, bezogen auf Hautgewicht [Gew.-%] | Vermehrung von Fäulnisbakterien bei 20°C [d] |
|---|---|
| 0 | 2 |
| 0,4 | 14 |
| 1 | 20 |
| 2 | 30 |
| 5 | 45 |

Die behandelte Haut weist erst nach frühestens zweiwöchiger Lagerzeit einen Befall durch Fäulnisbakterien auf.

### Bestimmung der viruziden Eigenschaften

Zur Prüfung der viruziden Eigenschaften werden unterschiedliche humanpathogene Viren mit dem entsprechenden Wirkstoff oder nur mit Medium 5 Minuten vorinkubiert. Hierbei werden unter den DNA-Viren jeweils ein Vertreter nackter und ein Vertreter umhüllter Viren ausgewählt:

| | nackt | umhüllt |
|---|---|---|
| DNA-Virus | Adenovirus Typ 5 (Adenoid 55) | Herpes simplex Virus Typ 1 corneae |

Anschließend werden geeignete Zellkulturen mit diesen vorbehandelten Viren infiziert. Die Medium-behandelten Virusansätze dienen als Kontrolle und werden im folgenden als "unbehandelte" Virusansätze bezeichnet. Durch Vergleich behandelter und unbehandelter Ansätze wird das Ausmaß der viruziden Wirkung des Desinfektionswirkstoffes bestimmt.

### Methoden: Virusvorbehandlung mit Desinfektionsmittel:

250 µl Virussuspension (ohne fötales Kälberserum FCS) werden in Gegenwart von 750 µl Testlösung 5 min bei Raumtemperatur inkubiert. Die Testlösungen enthalten als Wirkstoffe Cocosalkyl-dimethyl-benzylammoniumchlorid (CMBA), N-Cocosalkylpropylendiamin-N,N'-diguanidiniumdiacetat (CPGA), Poly-(didecyl-polyoxethylammoniumboarat (DPAB) und Didecyl-methyl-polyoxethyl-ammoniumpropionat (DMOA) (je 500 µg/ml Endkonz.), Formalin (0,7 % Endkonz.) und Dulbecco's Minimal Essential Medium (MEM). Die Virussuspensionen werden in der höchsten verfügbaren Konzentration verwendet (Adeno 5x10⁴ x CCID₅₀, HSV-1 5x10⁵ x CCID₅₀ (= 5x10⁷ Plaque bildende Einheiten); CCID₅₀ (cell culture infectious dose 50 %) ist die Viruskonzentration, bei der nach 3 Tagen Inkubation bei 37°C 50 % der Zellen geschädigt vorliegen).

Nach Zugabe von 3,7 ml MEM (ohne FCS) werden die Ansätze für 30 min bei 4°C, 211.000 x g (Beckman L7-55, SW 50.1) zentrifugiert, damit das Desinektionsmittel aus dem Ansatz entfernt wird. Das virusenthaltende Sediment wird in 4,7 ml MEM resuspendiert und nochmals für 1 h unter gleichen Bedingungen zentrifugiert. Nach Resuspendieren des Sediments in 1 ml MEM werden die unterschiedlich vorbehandelten Virusansätze auf Infektiosität im Zellkulturassay untersucht.

### Zellkulturassay:

Humane Zervixkarzinomzellen (HeLa) werden in Dulbecco's Minimal Essential Medium (MEM) in Gegenwart von 10 % fötalem Kälberserum (FCS) und Affennierenzellen (Vero) in Medium 199 in Gegenwart von 5 % FCS kultiviert.

Bei konfluentem Zellrasen werden die Zellen geerntet. Der Zelltiter wird mit MEM (100 U/ml Penicillin, 100 mg/ml Streptomycin, 4 % FCS) auf 2,5x10³ Zellen/ml eingestellt. In 96-Napf Mikrotiterplatten werden 200 µl dieser Zellsuspension (5x10² Zellen pro Napf) pipettiert. Anschließend werden die Platten für 5 h bei 37°C und 5 % CO₂ inkubiert.

Von den vorbehandelten und den unbehandelten Virussuspensionen werden Reihenverdünnungen in 3er-Verdünnungsschritten durchgeführt. HeLa-Zellen werden mit einer Verdünnung (je 100 µl in MEM ohne FCS) von Adenovirus 5 (Adenoid 55) infiziert. Verozellen werden entsprechend mit Herpes simplex Virus Typ 1 (Stamm corneae) infiziert. Die Inkubation wird anschließend für 3 Tage bei 37°C fortgesetzt.

Alle Untersuchungen werden doppelt durchgeführt. Nach 72 h Inkubation bei 37°C, wenn die Infektionskontrollen einen kompletten zytopathogenen Effekt (CPE) zeigen, werden die Platten begutachtet und anschließend mit Neutralrot nach Finter angefärbt.

### Resultate:

**Tabelle 6**

| Einfluß der Desinfektionswirkstoffe auf die Viruskonzentration, angegeben in Vielfachen der CCID₅₀. | | | | | | | |
|---|---|---|---|---|---|---|---|
| Virusart | Inkubations zeit [min] | CCID₅₀ [µg/ml] | | | | | |
| | | MEM (Kontrolle) | CMBA (500) | CPGA (500) | DPAB (500) | DMOA (500) | Formalin (0,7%) (Vergleich) |
| Adeno | 5 | 19.683 | < 3 | | | | 1 |
| | | 2.187 | | < 9 | | | 1 |
| | | 2.187 | | | < 9 | | < 1 |
| HSV-1 | 5 | 19.683 | < 3 | | | | < 1 |
| | | 6.561 | | < 3 | | | < 1 |
| | | 19.683 | | | < 3 | | < 1 |

**Tabelle 7**

| Einfluß der Desinfektionswirkstoffe auf die Reduktion des Virustiters. | | | | | |
|---|---|---|---|---|---|
| Virusart | Inkubations zeit [min] | Reduktionsfaktor der Viruskonzentration | | | |
| | | CMBA (500 µg/ml) | CPGA (500 µg/ml) | DPAB (500 µg/ml) | Formalin (0,7 %) (Vergleich) |
| Adeno | 5 | > 6561 | | | 6561 |
| | | | > 243 | | 729 |
| | | | | > 243 | > 2187 |
| HSV-1 | 5 | > 6561 | | | > 19683 |
| | | | > 2187 | | > 6561 |
| | | | | > 6561 | > 19683 |

### Diskussion:

Der Reduktionsfaktor wird bestimmt, um eine Maßzahl für die viruzide Wirkung der Wirkstoffe zu erhalten. Zuerst wird die Anzahl an Verdünnungsstufen bei vorbehandeltem und unbehandeltem Virus bestimmt, die notwendig ist, um noch 50 % der Zellkultur zu infizieren (Tabelle 6). Bei unbehandeltem, aktivem Virus ist hierfür meist eine höhere Anzahl an Verdünnungsstufen notwendig, bei vorbehandeltem Virus sollte bei viruzider Wirkung der Prüfsubstanz eine deutlich geringere Anzahl an Verdünnungsstufen erforderlich sein, da das Virus nur noch eingeschränkt oder gar nicht mehr infektiös ist. Der Quotient, gebildet aus den ermittelten Verdünnungsstufen bei unbehandeltem und vorbehandeltem Virus, wird als Reduktionsfaktor angegeben (Tabelle 7).

In dem Testmodell zeigen die eingesetzten Wirkstoffe eine deutliche viruzide Wirkung gegen Vertreter von nackten und umhüllten DNA-Viren.

## Patentansprüche

1. Verwendung eines mikrobiziden Mittels enthaltend polymeres quartäres Ammoniumborat, erhalten durch gleichzeitige Umsetzung von Aminen der allgemeinen Formeln I und/oder II 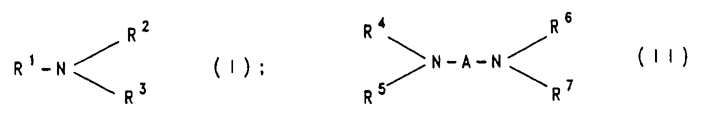 mit 1 bis 20, vorzugsweise 3 bis 10 Mol Ethylen- oder Propylenoxid und 0,6 bis 1,5, vorzugsweise 1 Mol Borsäure, Borsäureestern oder Salze der Borsäure, jeweils pro Mol Stickstoffequivalent, wobei
R¹ C₈-C₂₂-Alkyl oder C₈-C₂₂-Alkenyl bedeutet oder, wenn R² und R³ Gruppen der Formel -(C₂H₄O)ₓH oder -(C₃H₆O)ₓH darstellen, R¹ auch C₁-C₄-Alkyl bedeuten kann,
R² Wasserstoff, C₁-C₂₂-Alkyl oder eine Gruppe der Formeln -C₁-C₂₂-Alkyl oder eine Gruppe der Formeln -(C₂H₄O)ₓH, -(C₃H₆O)ₓH oder -CH₂CH₂CH₂NH₂ bedeutet,
R³ Wasserstoff oder eine Gruppe der Formeln -(C₂H₄O)ₓH, -(C₃H₆O)ₓH oder -CH₂CH₂CH₂NH₂ bedeutet,
R⁴ und R⁶ C₁-C₄-Alkyl oder eine Gruppe der Formel -(C₂H₄O)ₓH oder - (C₃H₆O)ₓH bedeuten,
R⁵ und R⁷ eine Gruppe der Formel -(C₂H₄O)ₓH oder -(C₃H₆O)ₓH,
A eine Gruppe der Formeln -(CH₂)ₙ-, -(CH₂CH₂OCH₂CH₂)ₙ- oder -(CH₂CH₂NHCH₂CH₂)n-,
x Zahlen von 1 bis 55 und n eine ganze Zahl von 1 bis 20 bedeuten,
als Konservierungsmittel und/oder Desinfektionsmittel für technische Erzeugnisse und technische Anlagen.

2. Verwendung des mikrobiziden Mittels gemäß Anspruch 1, im Gemisch mit weiteren mikrobiziden Wirkstoffen, Zusatzstoffen und/oder Lösungsmitteln.

3. Verwendung des mikrobiziden Mittels gemäß Anspruch 1 oder 2 als Zusatz bei der Formulierung von desinfizierenden Reinigungsmitteln.

4. Verwendung gemäß Anspruch 1 oder 2 für Polymerdispersionen, Farben, Lacke, Textilien, Leder oder Kühlschmiermittel.

5. Verwendung gemäß Anspruch 1 oder 2 für Wasserkreisläufe, Wasserbehälter, Wärmeaustauscher, Ölbohr- oder Ölfördereinrichtungen.

6. Mikrobizides Mittel, dadurch gekennzeichnet, daß das Mittel einen Gehalt von
0,1-70 Gew.-% an polymerem quartärem Ammoniumborat,
99,9-30 Gew.-% weiteren mikrobiziden Wirkstoffen und
0-50 Gew.-% Zusatzstoffen besitzt.

7. Mikrobizides Mittel gemäß Anspruch 6, dadurch gekennzeichnet, daß das Mittel einen Gehalt von 5-40 Gew.-% an polymerem quartärem Ammoniumborat und 60-95 Gew.-% weiteren bioziden Wirkstoffen enthält.

8. Wäßrige Lösungen oder Mikroemulsionen enthaltend mikrobizides Mittel gemäß Anspruch 6.

9. Nicht-wäßrige Lösungen oder Mikroemulsionen enthaltend mikrobizides Mittel gemäß Anspruch 6.

10. Verfahren zum Konservieren und/oder Desinfizieren von technischen Erzeugnissen und technischen Anlagen mit einem mikrobiziden Mittel, dadurch gekennzeichnet, daß das mikrobizide Mittel gemäß einem der Ansprüche 6 bis 9 aufgebracht wird.

11. Verwendung des mikrobiziden Mittels gemäß einem der Ansprüche 6 bis 9 als Konservierungsmittel und/oder Desinfektionsmittel für technische Erzeugnisse und technische Anlagen.
